(19) Europäisches Patentamt
European Patent Office
Office européen des brevets

(11) **EP 4 404 609 A1**

(12) **EUROPEAN PATENT APPLICATION**
published in accordance with Art. 153(4) EPC

(43) Date of publication:
**24.07.2024 Bulletin 2024/30**

(21) Application number: **22869116.8**

(22) Date of filing: **08.09.2022**

(51) International Patent Classification (IPC):
*H04W 16/14* [(2009.01)]    *H04B 17/382* [(2015.01)]

(52) Cooperative Patent Classification (CPC):
**H04B 17/382; H04W 16/14**

(86) International application number:
**PCT/CN2022/117840**

(87) International publication number:
**WO 2023/040747 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2021 CN 202111075442**

(71) Applicant: **Vivo Mobile Communication Co., Ltd.**
**Dongguan, Guangdong 523863 (CN)**

(72) Inventors:
• **JIANG, Dajie**
  **Dongguan, Guangdong 523863 (CN)**
• **YAO, Jian**
  **Dongguan, Guangdong 523863 (CN)**
• **QIN, Fei**
  **Dongguan, Guangdong 523863 (CN)**
• **CHEN, Baolong**
  **Dongguan, Guangdong 523863 (CN)**

(74) Representative: **Lavoix**
**Bayerstraße 83**
**80335 München (DE)**

(54) **PERCEPTION SIGNAL TRANSMISSION PROCESSING METHOD AND APPARATUS, ELECTRONIC DEVICE, AND READABLE STORAGE MEDIUM**

(57) This application discloses a perception signal transmission processing method and apparatus, an electronic device, and a readable storage medium, and pertains to the field of communications technologies. The perception signal transmission processing method in the embodiments of this application includes: receiving, by a first device, target information from a second device, where the target information is used for indicating a first indicator or an expected adjustment parameter, and the first indicator is indicator information determined based on a first perception signal; determining, by the first device, a first transmission parameter for a second perception signal based on the target information; and sending, by the first device, the second perception signal based on the first transmission parameter.

A first device receives target information from a second device — 401

↓

The first device determines a first transmission parameter for a second perception signal based on the target information — 402

↓

The first device sends the second perception signal based on the first transmission parameter — 403

FIG. 4

## Description

## CROSS-REFERENCE TO RELATED APPLICATIONS

This application claims priority to Chinese Patent Application No. 202111075442.9, filed on September 14, 2021 in China, which is incorporated herein by reference in its entirety.

## TECHNICAL FIELD

This application pertains to the field of communications technologies, and in particular, to a perception signal transmission processing method and apparatus, an electronic device, and a readable storage medium.

## BACKGROUND

With the development of communications technologies, in the future communications system, the communications device will have perception ability in addition to communications ability. The communications device with perception ability can perceive relevant information of the target object through sending and receiving a wireless signal. Generally, the network side device configures a transmission parameter for the perception signal, and sends and receives the perception signal based on the transmission parameter, to perceive the target object. Because states of the perceived target object are flexible and changeable, it is easy to cause poor perception quality by using a fixed transmission parameter to send and receive the perception signal.

## SUMMARY

Embodiments of this application provide a perception signal transmission processing method and apparatus, an electronic device, and a readable storage medium, to resolve the problem of poor perception quality in the related art.

According to a first aspect, a perception signal transmission processing method is provided, including:

receiving, by a first device, target information from a second device, where the target information is used for indicating a first indicator or an expected adjustment parameter, and the first indicator is indicator information determined based on a first perception signal;
determining, by the first device, a first transmission parameter for a second perception signal based on the target information; and
sending, by the first device, the second perception signal based on the first transmission parameter.

According to a second aspect, a perception signal transmission processing method is provided, including:

determining, by a second device, a first indicator or an expected adjustment parameter, where the first indicator is indicator information determined based on a first perception signal; and
sending, by the second device, target information to a target device, where
the target information is used for indicating the first indicator or the expected adjustment parameter; and
the target device is a first device or a core network device, and the target information is used for the first device to determine a first transmission parameter for a second perception signal.

According to a third aspect, a perception signal transmission processing method is provided, including:

determining, by a second device, a first indicator based on a third perception signal;
adjusting, by the second device, a reception mode of a fourth perception signal based on the first indicator; and
receiving, by the second device, the fourth perception signal from a first device according to the reception mode.

According to a fourth aspect, a perception signal transmission processing apparatus is provided, including:

a first receiving module, configured to receive target information from a second device, where the target information is used for indicating a first indicator or an expected adjustment parameter, and the first indicator is indicator information determined based on a sent first perception signal;
a first determining module, configured to determine a first transmission parameter for a second perception signal based on the target information; and
a first sending module, configured to send the second perception signal based on the first transmission parameter.

According to a fifth aspect, a perception signal transmission processing apparatus is provided, including:

a second determining module, configured to determine a first indicator or an expected adjustment parameter, where the first indicator is indicator information determined based on a first perception signal; and
a second sending module, configured to send the target information to a target device, where
the target information is used for indicating the first indicator or the expected adjustment parameter; and
the target device is a first device or a core network device, and the target information is used for the first device to determine a first transmission parameter for a second perception signal.

According to a sixth aspect, a perception signal transmission processing apparatus is provided, including:

a third determining module, configured to determine a first indicator based on a third perception signal;
an adjusting module, configured to adjust, based on the first indicator, a reception mode of receiving a fourth perception signal from a first device; and
a third receiving module, configured to receive the fourth perception signal according to the reception mode.

According to a seventh aspect, a terminal is provided. The terminal includes a processor, a memory, and a program or an instruction stored in the memory and executable on the processor, and the program or the instruction is executed by the processor to implement steps of the method according to the first aspect, the second aspect, or the third aspect.

According to an eighth aspect, a terminal is provided, including a processor and a communications interface, where

the communications interface is configured to receive target information from a second device, where the target information is used for indicating a first indicator or an expected adjustment parameter, and the first indicator is indicator information determined based on a first perception signal;
the processor is configured to determine a first transmission parameter for a second perception signal based on the target information; and
the communications interface is further configured to send the second perception signal based on the first transmission parameter; or
the processor is configured to determine a first indicator or an expected adjustment parameter, where the first indicator is indicator information determined based on a first perception signal; and
the communications interface is configured to send the target information to a target device, where the target information is used for indicating the first indicator or the expected adjustment parameter; and
the target device is a first device or a core network device, and the target information is used for the first device to determine a first transmission parameter for a second perception signal; or
the processor is configured to: determine a first indicator based on a third perception signal; and adjust, based on the first indicator, a reception mode of receiving a fourth perception signal from a first device; and
the communications interface is configured to receive the fourth perception signal according to the reception mode.

According to a ninth aspect, a network side device is provided. The network side device includes a processor, a memory, and a program or an instruction stored in the memory and executable on the processor, and the program or the instruction is executed by the processor to implement steps of the method according to the first aspect, the second aspect, or the third aspect.

According to a tenth aspect, a network side device is provided, including a processor and a communications interface, where

the communications interface is configured to receive target information from a second device, where the target information is used for indicating a first indicator or an expected adjustment parameter, and the first indicator is indicator information determined based on a first perception signal;
the processor is configured to determine a first transmission parameter for a second perception signal based on the target information; and
the communications interface is further configured to send the second perception signal based on the first transmission parameter; or
the processor is configured to determine a first indicator or an expected adjustment parameter, where the first indicator is indicator information determined based on a first perception signal; and
the communications interface is configured to send the target information to a target device, where the target information is used for indicating the first indicator or the expected adjustment parameter; and
the target device is a first device or a core network device, and the target information is used for the first device to determine a first transmission parameter for a second perception signal; or
the processor is configured to: determine a first indicator based on a third perception signal; and adjust, based on the first indicator, a reception mode of receiving a fourth perception signal from a first device; and
the communications interface is configured to receive the fourth perception signal according to the reception mode.

According to an eleventh aspect, a readable storage medium is provided. The readable storage medium stores a program or an instruction, and the program or the instruction is executed by a processor to implement steps of the method according to the first aspect, the second aspect, or the third aspect.

According to a twelfth aspect, an embodiment of this application provides a chip. The chip includes a processor and a communications interface, the communications interface is coupled to the processor, and the processor is configured to run a program or an instruction to implement steps of the method according to the first aspect, the second aspect, or the third aspect.

According to a thirteenth aspect, a computer program/program product is provided. The computer program/program product is stored in a non-transient storage medium, and the computer program/program product is executed by at least one processor to implement the method according to the first aspect, the second aspect, or the third aspect.

In this embodiment of this application, the first device receives the target information from the second device, where the target information is used for indicating the first indicator or the expected adjustment parameter, and the first indicator is indicator information determined based on the first perception signal; the first device determines the first transmission parameter for the second perception signal based on the target information; and the first device sends the second perception signal based on the first transmission parameter. In this way, the transmission parameter may be adjusted for the perception signal based on a received state of the perception signal, thereby improving the perception quality.

**BRIEF DESCRIPTION OF DRAWINGS**

FIG. 1 is a structural diagram of a network system to which the embodiments of this application can be applied;

FIG. 2 is an example diagram of a communications perception scenario to which a perception signal transmission processing method is applied according to an embodiment of this application;

FIG. 3 is an example diagram of another communications perception scenario to which a perception signal transmission processing method is applied according to an embodiment of this application;

FIG. 4 is a first flowchart of a perception signal transmission processing method according to an embodiment of this application;

FIG. 5 is a second flowchart of a perception signal transmission processing method according to an embodiment of this application;

FIG. 6 is a third flowchart of a perception signal transmission processing method according to an embodiment of this application;

FIG. 7 is an example diagram of still another communications perception scenario to which a perception signal transmission processing method is applied according to an embodiment of this application;

FIG. 8 is a first example diagram of a result of frequency analysis of a channel frequency response corresponding to a perception signal received on a receive antenna in a perception signal transmission processing method according to an embodiment of this application;

FIG. 9 is a second example diagram of a result of frequency analysis of a channel frequency response corresponding to a perception signal received on a receive antenna in a perception signal transmission processing method according to an embodiment of this application;

FIG. 10 is a third example diagram of a result of frequency analysis of a channel frequency response corresponding to a perception signal received on a receive antenna in a perception signal transmission processing method according to an embodiment of this application;

FIG. 11 is a fourth example diagram of a result of frequency analysis of a channel frequency response corresponding to a perception signal received on a receive antenna in a perception signal transmission processing method according to an embodiment of this application;

FIG. 12 is a first structural diagram of a perception signal transmission processing apparatus according to an embodiment of this application;

FIG. 13 is a third structural diagram of a perception signal transmission processing apparatus according to an embodiment of this application;

FIG. 14 is a fourth structural diagram of a perception signal transmission processing apparatus according to an embodiment of this application;

FIG. 15 is a structural diagram of a communications device according to an embodiment of this application;

FIG. 16 is a structural diagram of a terminal according to an embodiment of this application; and

FIG. 17 is a structural diagram of a network side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system or other communications systems in the future.

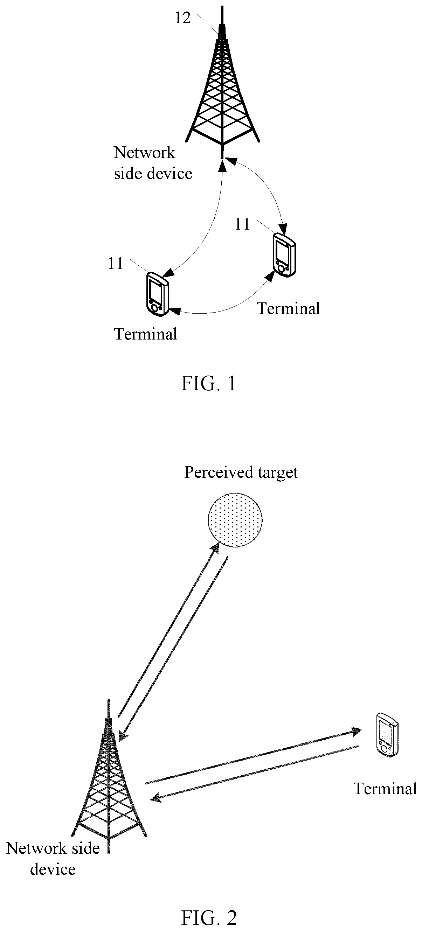

FIG. 1 is a block diagram of a wireless communications system to which embodiments of this application can be applied. The wireless communications system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (household devices with wireless communications functions, such as a refrigerator, a television, a washing machine, or furniture), and the wearable device include a smart watch, a smart band, a smart headphone, smart glasses, smart jewelry (a smart bracelet, a smart hand chain, a smart ring, a smart necklace, a smart bangle, a smart anklet, or the like), a smart wristband, smart clothes, a game console, and the like. It should be noted that a specific type of the terminal 11 is not limited in the embodiments of this application. The network side device 12 may be a base station or a core network device, and the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to specific technical vocabulary. It should be noted that the base station in an NR system is merely used as an example, but a specific type of the base station is not limited in the embodiments of this application.

For ease of understanding, the following describes some content in the embodiments of this application.

I. Integration of communication perception, also referred to as communication perception integration.

The future mobile communications system, such as B5G system or 6G system, will not only have communications ability, but also have perception ability. That is, one or more devices with perception ability can perceive information such as the orientation, distance, and speed of the target object through sending and receiving of wireless signals, or detect, track, identify and image the target object, event, or environment. In the future, with the deployment of communications devices with high band and large bandwidth such as millimeter wave and terahertz in 6G network, the perception resolution will be significantly improved compared with centimeter wave, thus enabling 6G network to provide more detailed perception services.

The purpose of perception is mainly divided into two categories. The first category is that perception is used to assist communication or enhance communications performance, for example, the first device provides more accurate beam shaping alignment devices by tracking a moving track of the device; and another category is perception that has nothing to do with communication, for example, the communications device monitors weather conditions through wireless signals, and the mobile phone recognizes user gestures through millimeter-wave wireless perception.

Perception can be divided into the following categories.

1. Active perception. As shown in FIG. 2, a device uses a reflected signal of a signal transmitted by the device, such as echo for perception, and a transceiver is located in a same position. Different antennas can be used to perceive surrounding environment information of the device.

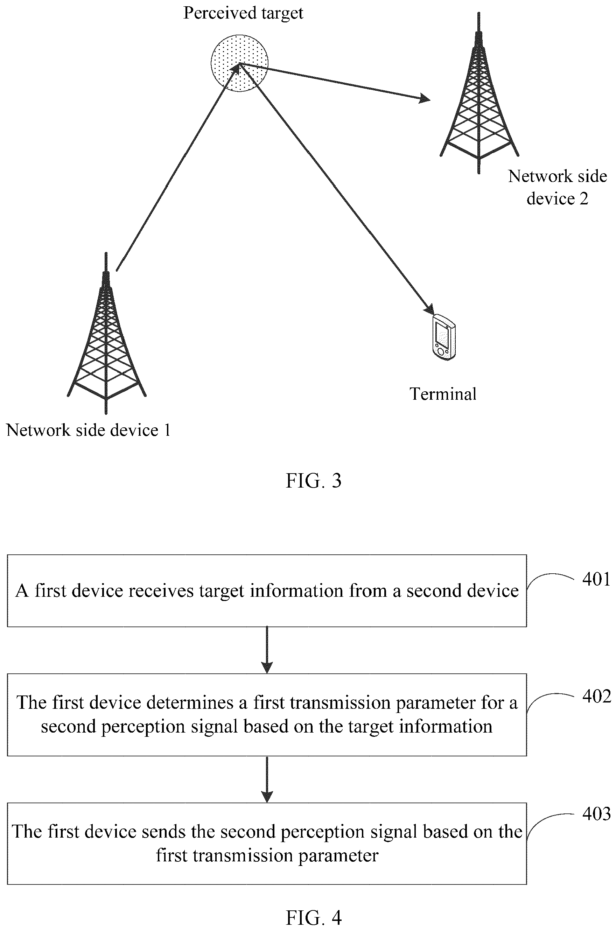

2. Passive perception. As shown in FIG. 3, transceivers are located in different positions, and the receiver uses the wireless signals transmitted by the transmitter for perception. For example, a device A perceives environmental information between the device A and a device B by receiving the wireless signals from the device B.

3. Interactive perception: the subject, time, frequency, and format for sending the electromagnetic wave are specified between the perceiver and the target object through information interaction, and the process of perception is completed.

The communication perception integration design is feasible from the following four aspects:

both the communications system and the perception system are based on electromagnetic wave theory, and information obtaining and transmission are completed by transmitting and receiving electromagnetic waves;

both the communications system and the perception system have antenna, transmitter, receiver, signal processor, and other structures, and there is great overlap in hardware resources;

with the development of technology, there is more and more overlap between the communications system and the perception system in an operating band; and

there are similarities in key technologies such as signal modulation, reception detection, and waveform design.

The air interface design of B5G system or 6G system will support both wireless communications signals and wireless perception signals, and realize the integrated design of communication and perception functions through signal joint design and/or hardware sharing, so as to have perception ability or provide perception services while transmitting information.

The benefits of communication perception integration include the following aspects:

save costs;
reduce the size of the device;
reduce power consumption of the device;
improve spectrum efficiency; and
reduce mutual interference between communication perceptions and improve the system performance.

II. Radar technology.

Radar technology is a typical perception technology. Modern radar system has been deployed all over the world, and it has been applied in many fields such as weather forecast, alert monitoring, and aviation navigation. At present, below the 10 GHz band, L-band (1-2 GHz), S-band (2-4 GHz), and C-band (4-8 GHz) are mainly occupied by a large number of military or civil radar systems. However, these bands will probably accommodate more LTE, 5G New Radio (New Radio, NR) systems and Wi-Fi systems in the future. In a higher band, a communications band of 5G millimeter wave is very close to an operating band of vehicle-mounted millimeter wave radar. With the further development of wireless communications technology, more and more radar bands will be interfered. Historically, radar and communications systems have been evolving to miniaturization and higher bands. At present, in millimeter wave band, the hardware architecture, channel characteristics, and signal processing methods for the radar and the communications system in the related art are very close. From the civil point of view, a considerable number of emerging 5G/B5G applications need joint design of perception and communication, such as Internet of Things applications such as smart cities and smart homes, and intelligent transportation applications such as car networking and autonomous driving. From the military point of view, the development of radio frequency systems such as radar, communication, and electronic warfare has been separated from each other for a long time, which consumes a lot of spectrum and hardware resources and reduces the efficiency of the combat platform. In order to make efficient use of spectrum resources and serve a variety of emerging civil and military application scenarios, radar and communication spectrum sharing (Radar and Communication Spectrum Sharing, RCSS) has recently attracted great attention from academic and industrial circles.

From the working system, the communication generally uses time division or frequency division duplex, while the radar can be roughly divided into pulse radar and continuous wave radar, and some radars need to support full duplex.

Radar detection has different performance indicators and limits. For example, target detection performance is given by detection probability/false alarm probability, and an optimal lower bound of target parameter estimation variance is given by Gram é r-Rao lower bound. At present, about how to adjust the transmit power and other parameters of the perception signal, so as to improve the signal quality or perception quality of the perception signal, there is no clear definition of this process in the industry and academia.

With reference to the accompanying drawings, a perception signal transmission processing method provided in the embodiments of this application is described in detail by using some embodiments and application scenarios thereof.

Referring to FIG. 4, FIG. 4 is a flowchart of a perception signal transmission processing method according to an embodiment of this application. As shown in FIG. 4, the method includes the following steps.

Step 401. A first device receives target information from a second device, where the target information is used for indicating a first indicator or an expected adjustment parameter, and the first indicator is indicator information determined based on a first perception signal.

In this embodiment of this application, the first device and the second device are different devices, where the first device can be a terminal or a network side device. When the first device is a terminal, the second device can be a terminal or a network side device, and when the first device is a network side device, the second device can be a terminal or a network side device.

It should be understood that the first device can directly or indirectly receive the target information from the second device, for example, the second device can directly send the target information to the first device, or the second device can send the target information to the core network device, and then the first device receives the target information forwarded by the core network device.

Step 402. The first device determines a first transmission parameter for a second perception signal based on the target information.

Step 403. The first device sends the second perception signal based on the first transmission parameter.

It should be noted that in this embodiment of this application, the first indicator can be determined by a second device or a third device, and the first perception signal can be sent by the first device or a fourth device. In order to better understand this application, the following embodiments will use an example in which the first indicator is determined by the second device, and the first perception signal is sent by the first device for description.

For example, the first device may first send the first perception signal to the second device based on a second transmission parameter of the first perception signal, and the second device will receive the first perception signal based on the second transmission parameter. For example, the second device may determine a reception mode of the first perception signal based on the second transmission parameter, and then receive the first perception signal according to the reception mode. The second device may determine the first indicator based on the received first perception signal, and further, may determine the expected adjustment parameter based on the first indicator. The expected adjustment parameter can be understood as a transmission parameter that the second device expects to adjust for a perception signal sent by the first device. In some embodiments, the expected adjustment parameter is the first transmission parameter or difference information between the first transmission parameter and the second transmission parameter.

Optionally, after receiving the target information, the first device may directly determine the first transmission parameter of the second perception signal based on the target information, and the second perception signal and the first perception signal can be the same kind of signals or different kinds of signals.

It should be noted that the first indicator can be a real number value or a dB value. The first indicator is notified with a specific minimum granularity, for example, a minimum granularity of 1 dB.

It should be understood that the first indicator can be obtained by the second device detecting the first perception signal in a period of time at a specific sampling interval.

In this embodiment of this application, the first device receives the target information from the second device, where the target information is used for indicating the first indicator or the expected adjustment parameter, and the first indicator is indicator information determined based on the first perception signal; the first device determines the first transmission parameter for the second perception signal based on the target information; and the first device sends the second perception signal based on the first transmission parameter. In this way, a transmission parameter for subsequent perception signals can be adjusted based on received quality or a received performance indicator of the perception signal, thereby improving the perception quality.

Optionally, the expected adjustment parameter includes at least one of the following: transmit power, a time length, a time interval, a transmit port, a frequency resource, and a codeword resource.

In this embodiment of this application, the expected adjustment parameter is associated with the second perception signal. The first device can adjust at least part of the transmission parameters for the second perception signal based on the expected adjustment parameter, such as adjusting the transmit power of the second perception signal, adjusting the duration of the second perception signal, adjusting the time interval of the second perception signal, adjusting the number of the second perception signals, or adjusting the frequency resource or the codeword resource of the second perception signal. By adjusting at least part of the transmission parameters for the second perception signal, the perception quality can be improved when perception is performed based on the second perception signal.

For example, the first device receives the first indicator sent by the second device, and the first indicator is a difference between a ratio of a square of an amplitude of the target frequency of the target object to a square of an average amplitude and the target indicator. The difference is 3 dB.

For another example, the first device receives the first indicator sent by the second device, and the first indicator is a difference between a ratio of a first value to a second value and the target indicator, where the first value is a sum of squares of amplitudes of one or more target frequencies of the target object, and the second value is a sum of squares of amplitudes of all frequencies of the target object. For example, the difference is 3 dB.

For another example, the first device receives the first indicator sent by the second device, the first indicator is a difference between a ratio of a third value to a fourth value and the target indicator, where the third value is a sum of amplitudes of one or more target frequencies of the target object, and the fourth value is a sum of amplitudes of all frequencies of the target object. For example, the difference is 3 dB.

For another example, the first device receives the first indicator sent by the second device, and the first indicator is that the detection probability is 70% (in this case, the corresponding target indicator is a target detection probability, namely, 90%, which means that the actual detection probability is 20% lower than the target detection probability).

Optionally, the first transmission parameter includes at least one of the following: transmit power, a time length, a time interval, a transmit port, a frequency resource, and a codeword resource. It should be noted that the adjustment for the transmission parameter performed by the first device based on the target information may include at least one of the following operations:

increasing the power or power spectral density of the sent second perception signal by 3 dB;

doubling the time length of the sent second perception signal; using an example in which both the first perception signal and the second perception signal are CSI-RSs for description, where the first perception signal has a period of 20 milliseconds and a time length of 1 second; the second device detects the first perception signal to obtain the first indicator; and the first device receives the first indicator sent by the second device, and adjusts, based on the first indicator, the period of the second perception signal to keep 20 milliseconds, and the time length is increased to 2 seconds;

reducing the time interval of the sent second perception signal to 1/2 of the original; using an example in which both the first perception signal and the second perception signal are CSI-RSs for description, where the first perception signal has a period of 20 milliseconds and a time length of 1 second; the second device detects the first perception signal to obtain the first indicator; and the first device receives the first indicator sent by the second device, and adjusts, based on the first indicator, the period of the second perception signal to 10 milliseconds, and the time length remains the same; and

increasing the number of the transmitted second perception signals.

It should be understood that the adjustment for the transmission parameter of the second perception signal may be adjustment relative to the transmission parameter of the first perception signal or adjustment relative to a basic transmission parameter.

For example, the first device previously sent the first perception signal through one antenna port (or transmit antenna), and it is now adjusted as that the first device has sent two second perception signals through two antenna ports (or transmit antennas).

For another example, the first device previously sent the first perception signal through one frequency resource, and it is now adjusted as that the first device has sent two second perception signals through two frequency resources.

For another example, the first device previously sent the first perception signal through one (quasi-) orthogonal codeword resource, and it is now adjusted as that the first device has sent two second perception signals through two (quasi-) orthogonal codeword resources.

Further, when the second device detects, based on the second perception signal, that a new first indicator still does not meet the expected target indicator, the transmission parameter for the perception signal sent by the first device can be continuously adjusted. For example, the second device directly or indirectly sends the new first indicator or the new expected adjustment parameter determined based on the first indicator to the first device.

Optionally, in some embodiments, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

In this embodiment of this application, at least one of the first preset amplitude, the second preset amplitude, the first preset power, the second preset power, the first preset ratio, the second preset ratio, and the fourth preset ratio is specified in a protocol or notified to the second device by the first device.

It should be understood that the first preset amplitude, the second preset amplitude, the first preset power, the second preset power, the first preset ratio, the second preset ratio, and the fourth preset ratio can be understood as corresponding expected values after adjustment of transmission parameters. The first preset amplitude can be understood as a maximum expected amplitude, the second preset amplitude can be understood as an expected amplitude of the target frequency, the first preset power can be understood as maximum expected power, and the second preset power can be understood as the expected power of the target frequency. The first preset ratio can be understood as an expected ratio of the maximum amplitude to the average amplitude, the second preset ratio can be understood as an expected ratio of the amplitude of the target frequency to the average amplitude, the third preset ratio can be understood as a preset ratio of the maximum power to the average power, and the fourth preset ratio can be understood as an expected ratio of the power of the target frequency to the average power.

It should be noted that the power can be understood as a square of amplitude (namely, energy or power). For example, the ratio of the maximum power to the average power of the target object can be understood as a ratio of a square of the maximum amplitude of the target object to a square of the average amplitude (or an average value of the square of the amplitude), or a ratio of the energy of the target frequency of the target object to the total energy (a sum of all frequency energies and/or a sum of energies in a specific frequency domain window).

Optionally, in some embodiments, the first indicator further includes at least one of the following: a signal to noise ratio (Signal to Noise Ratio, SNR), a signal to interference plus noise ratio (Signal to Interference plus Noise Ratio, SINR), reference signal received power (Reference Signal Received Power, RSRP), received signal strength indication (Received Signal Strength Indication, RSSI), reference signal received quality (Reference Signal Received Quality, RSRQ), a detection probability, a perception error, a signal noise ratio, a signal side lobe feature, and a peak to average power ratio (Peak to Average Power Ratio, PAPR).

It should be understood that in this embodiment of this application, the detection probability is used to determine whether there is a perceived target or not, and the perception error is used to represent perception performance of a perception service. The perception error can also be understood as perception accuracy, which is related to a network hardware device, a specific resource configuration, and the SNR. The perception error can be defined by the following parameters: a maximum error; a percentage of the maximum error to a true value (namely, a relative maximum error); and relative error distribution.

Optionally, in some embodiments, the target object includes at least one of the following:
a result obtained by performing first transform on first data, where the first data includes at least one of the following:

a channel frequency response of the first perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;
a result obtained by performing first transform on second data, where the second data includes at least one of the following: a result obtained by performing point conjugate multiplying or point division on a channel frequency response of the first perception signal received by two receive antennas of the second device, an amplitude of the result, and a phase of the result; and
a result obtained by performing first transform on the target sequence.

It should be understood that a specific operation manner of the preset operation can be set according to actual requirements, for example, the preset operation is: A*cosθ+B*sinθ, where A represents the I-channel data, B represents the Q-channel data, and θ represents a specific angle value. Optionally, various values of θ can be polled to select a preset operation result corresponding to the best value of θ, for example, θ is polled at a specific granularity within a range of (-pi, pi].

It should be noted that in each embodiment of this application, the I-channel signal and the Q-channel signal are respectively an in-phase signal and a quadrature signal, I is in-phase, Q is quadrature, and a phase difference between the I-channel signal and the Q-channel signal is 90 degrees.

In some embodiments, the channel frequency response can be a channel frequency response corresponding to a perception signal on a target frequency resource obtained with a first sampling period (for example, a sampling period of 20 ms) within a preset time period (for example, 100 seconds) on a receive antenna of the second device. In this case, the channel frequency response has a total of 5000 complex values at different times (that is, a complex sequence with a size of 5000). Optionally, the target frequency resource may be at least one subcarrier, resource element (Resource element, RE), physical resource block (Physical Resource Block, PRB), bandwidth part (Bandwidth Part, BWP), carrier, and the like.

In some embodiments, the channel frequency response can be estimated by the second device according to the least square criterion or other methods for the received perception signal (for example, a channel state information reference signal (Channel State Information Reference Signal, CSI-RS)).

Optionally, the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, where
the first channel frequency response, the second channel frequency response, the third channel frequency response, and the fourth channel frequency response are channel frequency responses of the first perception signal received by different receive antennas of the second device.

It should be noted that the method for determining the target sequence can be set according to actual requirements. For example, in some embodiments, the target sequence is synthesized by splicing a first sequence and a second sequence. In other embodiments, the target sequence can be obtained in other manners, for example, extracting a partial sequence of the first sequence and a partial sequence of the second sequence for splicing synthesis. In addition, other redundant bit sequences can be added, which are not listed herein one by one.

Optionally, in some embodiments, the first sequence is obtained by performing point conjugate multiplying or point division on a first channel frequency response and a second channel frequency response; and the second sequence is obtained by performing point conjugate multiplying or point division on a third channel frequency response and a fourth channel frequency response, or the second sequence is obtained by performing point conjugate multiplying or point division on a third channel frequency response and the first channel frequency response.

For example, point conjugate multiplying or point division is performed on the channel frequency response of the perception signal received on a receive antenna 1 and the channel frequency response of the perception signal received on a receive antenna 2 to obtain a sequence A, and point conjugate multiplying or point division is performed on the channel frequency response of the perception signal received on a receive antenna 3 and the channel frequency response of the perception signal received on a receive antenna 4 to obtain a sequence B. The sequence A and the sequence B synthesize a larger sequence C. Then first transform is performed on the sequence C to obtain the target object. It should be noted that the sequence A and the sequence B need to be processed to eliminate phases or amplitude discontinuity of the sequence A and the sequence B before the sequence A and the sequence B synthesize a larger sequence C.

Alternatively, point conjugate multiplying or point division is performed on the channel frequency response of the perception signal received on a receive antenna 1 and the channel frequency response of the perception signal received on a receive antenna 2 to obtain a sequence X, and point conjugate multiplying or point division is performed on the channel frequency response of the perception signal received on a receive antenna 1 and the channel frequency response of the perception signal received on a receive antenna 3 to obtain a sequence Y The sequence X and the sequence Y synthesize a larger sequence Z. Then first transform is performed on the sequence Z to obtain the target object. It should be noted that the sequence X and the sequence Y need to be processed to eliminate phases or amplitude discontinuity of the sequence X and the sequence Y before the sequence X and the sequence Y synthesize a larger sequence Z.

It should be understood that in some embodiments, the first transform may be fast Fourier transform (fast Fourier transform, FFT) or wavelet transform. Certainly, in other embodiments, other similar types of transforms may also be used, which are not listed one by one herein. The first transform can also be a data processing method or a mathematical operation, the purpose of which is to analyze the frequency of the first data to find a target frequency component hidden in the first data, such as a human respiratory frequency component. One method is to calculate an autocorrelation value of the first data, and then obtain the target frequency component by averaging autocorrelation peaks. It should be noted that, in some embodiments, the first data may be preprocessed before frequency analysis is performed on the first data, for example, some abnormal values or burrs may be removed through preprocessing. One way is to use Savitzky-Golay function to smooth the first data.

Optionally, in some embodiments, after the first device determines a first transmission parameter for a second perception signal based on the target information, the method further includes:
sending, by the first device, second information to the second device or a core network device, where the second information is used for indicating the first transmission parameter.

In this embodiment of this application, the second device can detect the second perception signal based on the first transmission parameter indicated by the second information. In other words, the second device can adjust the reception mode of the second perception signal based on the first transmission parameter, to improve the perception quality.

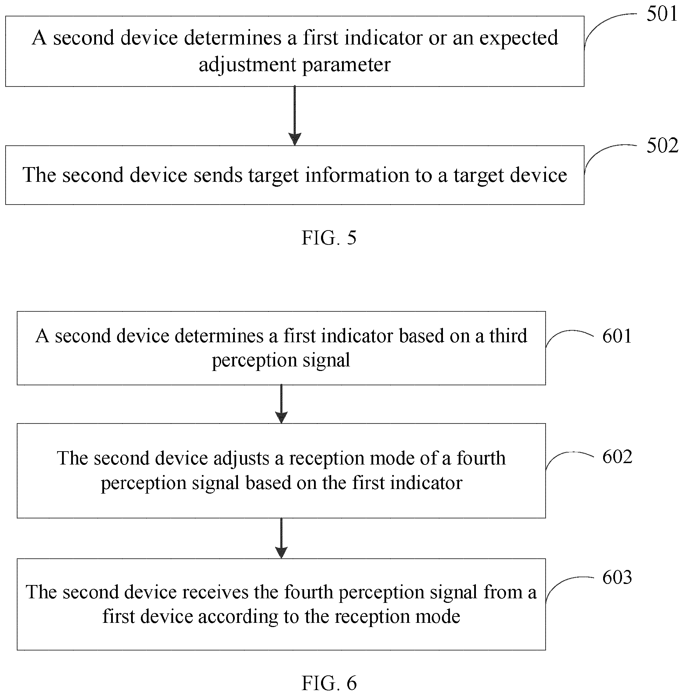

Referring to FIG. 5, FIG. 5 is a flowchart of another perception signal transmission processing method according to an embodiment of this application. As shown in FIG. 5, the method includes the following steps.

Step 501. A second device determines a first indicator or an expected adjustment parameter, where the first indicator is indicator information determined based on a first perception signal.

Step 502. The second device sends target information to a target device.

The target information is used for indicating the first indicator or the expected adjustment parameter; and the target device is a first device or a core network device, and the target information is used for the first device to determine a first transmission parameter for a second perception signal.

Optionally, after the second device sends the target information to the target device, the method further includes:

receiving, by the second device, second information sent by the target device, where the second information is used for indicating the first transmission parameter; and
receiving, by the second device, the second perception signal based on the first transmission parameter.

Optionally, the first transmission parameter includes at least one of the following: transmit power, a time length, a time interval, a transmit port, a frequency resource, and a codeword resource.

Optionally, the expected adjustment parameter includes at least one of the following: transmit power, a time length, a time interval, a transmit port, a frequency resource, and a codeword resource.

Optionally, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

Optionally, the first indicator further includes at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR).

Optionally, the target object includes at least one of the following:

a result obtained by performing first transform on first data, where the first data includes at least one of the following: a channel frequency response of the first perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;

a result obtained by performing first transform on second data, where the second data includes at least one of the following: a result obtained by performing point conjugate multiplying or point division on a channel frequency response of the first perception signal received by two receive antennas of the second device, an amplitude of the result, and a phase of the result; and

a result obtained by performing first transform on the target sequence.

Optionally, the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, where the first channel frequency response, the second channel frequency response, the third channel frequency response, and the fourth channel frequency response are channel frequency responses of the first perception signal received by different receive antennas of the second device.

Optionally, the first transform is fast Fourier transform (FFT) or wavelet transform. Certainly, in other embodiments, other similar types of transforms may also be used, which are not listed one by one herein. The first transform can also be a data processing method or a mathematical operation, the purpose of which is to analyze the frequency of the first data to find a target frequency component hidden in the first data, such as a human respiratory frequency component. One method is to calculate an autocorrelation value of the first data, and then obtain the target frequency component by averaging autocorrelation peaks. It should be noted that, in some embodiments, the first data may be preprocessed before frequency analysis is performed on the first data, for example, some abnormal values or burrs may be removed through preprocessing. One way is to use Savitzky-Golay function to smooth the first data.

Optionally, at least one of the first preset amplitude, the second preset amplitude, the first preset power, the second preset power, the first preset ratio, the second preset ratio, and the fourth preset ratio is specified in a protocol or notified to the second device by the first device.

It should be noted that this embodiment is used as an implementation of the second device corresponding to the embodiment shown in FIG. 4. For a specific implementation of this embodiment, refer to the related descriptions of the embodiment shown in FIG. 4. A same beneficial effect can also be achieved. To avoid repeated descriptions, details are not described again herein.

Referring to FIG. 6, FIG. 6 is a flowchart of another perception signal transmission processing method according to an embodiment of this application. As shown in FIG. 6, the method includes the following steps.

Step 601. A second device determines a first indicator based on a third perception signal.

Step 602. The second device adjusts a reception mode of a fourth perception signal based on the first indicator.

Step 603. The second device receives the fourth perception signal from a first device according to the reception mode.

In this embodiment of this application, the first device and the second device are different devices, where the first device can be a terminal or a network side device. When the first device is a terminal, the second device can be a terminal or a network side device, and when the first device is a network side device, the second device can be a terminal or a network side device.

It should be understood that the third perception signal can be sent by the second device or the first device, and can also be sent by a fourth device. In this embodiment of this application, an example in which the third perception signal is sent by the second device or the first device is used for description.

Optionally, the third perception signal and the fourth perception signal can be the same kind of signals or different kinds of signals. The first indicator can be a real number value or a dB value.

It should be noted that the first indicator can be obtained by the second device detecting the third perception signal in a period of time at a specific sampling interval. The transmission parameters for the first device to send the third perception signal and the fourth perception signal may not be changed, that is, the transmission parameter for the fourth perception signal may not be adjusted.

In this embodiment of this application, the second device determines the first indicator based on the third perception signal; the second device adjusts, based on the first indicator, the reception mode of receiving the fourth perception signal from the first device; and the second device receives the fourth perception signal according to the reception mode. In this way, the reception mode may be adjusted for the perception signal based on a received state of the perception signal, thereby improving the perception quality.

Optionally, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

For example, the first device receives the first indicator sent by the second device, and the first indicator is a difference between a ratio of a sum of squares of amplitudes of one or more target frequencies of the target object to a square of an average amplitude of all frequencies and the target indicator. For example, the second device detects the perception signal at a sampling interval of 20 ms in a time length of 0.5 seconds, and the difference is obtained as 3 dB.

For another example, the first device receives the first indicator sent by the second device, and the first indicator is a difference between a ratio of a first value to a second value and the target indicator, where the first value is a sum of squares of amplitudes of one or more target frequencies of the target object, and the second value is a sum of squares of amplitudes of all frequencies of the target object. For example, the difference is 3 dB.

For another example, the first device receives the first indicator sent by the second device, the first indicator is a difference between a ratio of a third value to a fourth value and the target indicator, where the third value is a sum of amplitudes of one or more target frequencies of the target object, and the fourth value is a sum of amplitudes of all frequencies of the target object. For example, the difference is 3 dB.

For another example, the first device receives the first indicator sent by the second device, and the first indicator is that the detection probability is 70% (in this case, the corresponding target indicator is a target detection probability, namely, 90%, which means that the actual detection probability is 20% lower than the target detection probability).

Optionally, the reception mode is associated with at least one of the following: a sampling frequency for the fourth perception signal, detection duration for the fourth perception signal, the number of receive antennas for receiving the fourth perception signal, a frequency resource for receiving the fourth perception signal, and the number of antenna ports for receiving the fourth perception signal. In this embodiment of this application, the second device may determine the reception mode of the fourth perception signal based on at least one of the following behaviors.

The second device doubles the sampling interval of the fourth perception signal (10 ms; in this case, a transmission period of the perception signal is less than or equal to 10 ms), while the detection duration for the fourth perception signal remains unchanged (0.5 seconds).

Keep the sampling interval (20 ms) unchanged, and the second device doubles the detection duration for the fourth perception signal (1 second, in this case, the transmit duration for the second perception signal is greater than or equal to 1 second).

Increase the number of antennas for receiving perception signals. For example, the second device previously received the third perception signal sent by the first device through one receive antenna (or a receive channel), and it is now adjusted as that the second device receives the fourth perception signal through two receive antennas (or receive channels).

For example, the second device performs point conjugate multiplying or point division on the channel frequency response of the perception signal received on a receive antenna 1 and the channel frequency response of the perception signal received on a receive antenna 2 to obtain a sequence A, and point conjugate multiplying or point division is performed on the channel frequency response of the perception signal received on a receive antenna 3 and the channel frequency response of the perception signal received on a receive antenna 4 to obtain a sequence B. The sequence A and the sequence B synthesize a larger sequence C. Then first transform is performed on the sequence C to obtain the target object. It should be noted that the sequence A and the sequence B need to be processed to eliminate phases or amplitude discontinuity of the sequence A and the sequence B before the sequence A and the sequence B synthesize a larger sequence C.

Alternatively, point conjugate multiplying or point division is performed on the channel frequency response of the perception signal received on a receive antenna 1 and the channel frequency response of the perception signal received on a receive antenna 2 to obtain a sequence X, and point conjugate multiplying or point division is performed on the channel frequency response of the perception signal received on a receive antenna 1 and the channel frequency response of the perception signal received on a receive antenna 3 to obtain a sequence Y The sequence X and the sequence Y synthesize a larger sequence Z. Then first transform is performed on the sequence Z to obtain the target object. It should be noted that the sequence X and the sequence Y need to be processed to eliminate phases or amplitude discontinuity of the sequence X and the sequence Y before the sequence X and the sequence Y synthesize a larger sequence Z.

The second device increases the number of received perception signals. For example, the second device previously received the third perception signal sent by the first device through one antenna port (or transmit antenna), and it is now adjusted as that the second device receives two fourth perception signals sent by the first device through two antenna ports (or transmit antennas). For another example, the second device previously received the third perception signal sent by the first device through one frequency resource, and it is now adjusted as that the second device receives two fourth perception signals sent by the first device through two frequency resources. For another example, the second device previously received the third perception signal sent by the first device through an orthogonal code word resource, and it is now adjusted as that the second device receives two fourth perception signals sent by the first device through two (quasi-) orthogonal code word resources. The second device jointly processes a plurality of received perception signals to improve the perception performance.

Optionally, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

Optionally, the first indicator further includes at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR). Optionally, the target object includes at least one of the following:

a result obtained by performing first transform on first data, where the first data includes at least one of the following: a channel frequency response of the third perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;

a result obtained by performing first transform on second data, where the second data includes at least one of the following: a result obtained by performing point conjugate multiplying or point division on a channel frequency response of the third perception signal received by two receive antennas of the second device, an amplitude of the result, and a phase of the result; and

a result obtained by performing first transform on the target sequence.

Optionally, the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, where

the first channel frequency response, the second channel frequency response, the third channel frequency response, and the fourth channel frequency response are channel frequency responses of the third perception signal received by different receive antennas of the second device.

Optionally, the first transform is fast Fourier transform (FFT) or wavelet transform.

Optionally, at least one of the first preset amplitude, the second preset amplitude, the first preset power, the second preset power, the first preset ratio, the second preset ratio, and the fourth preset ratio is specified in a protocol or notified to the second device by the first device.

To better understand this application, a detailed description will be given below based on a simulation example.

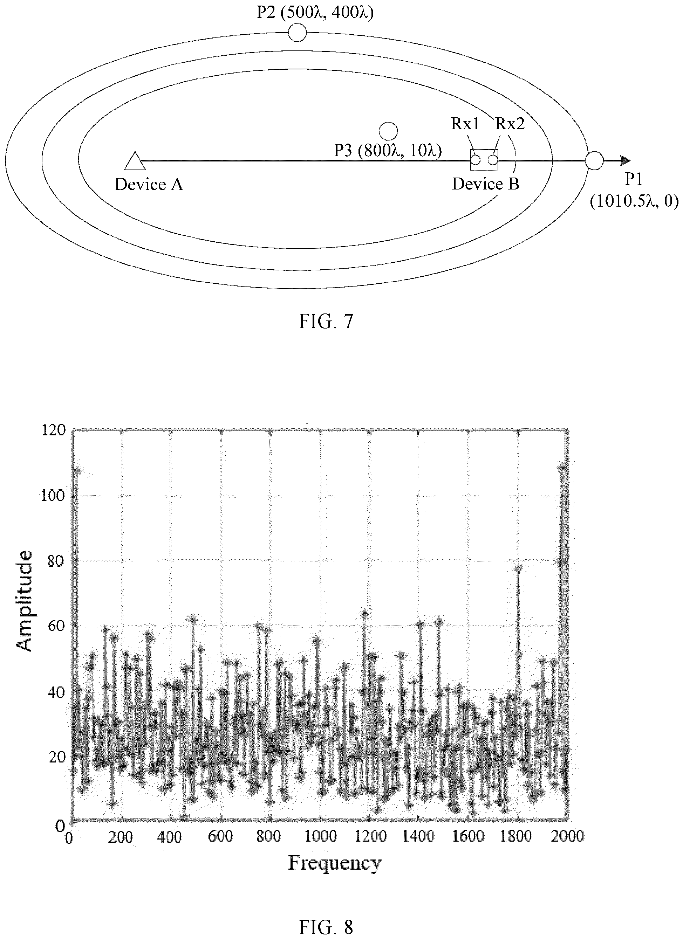

As shown in FIG. 7, assume the following simulation scenario:

a device A is a transmit end of the perception signal, and a device B is a receive end of the perception signal, where a distance between the device A and the device B is 1000 wavelengths ($\lambda$), and the device A and the device B are on a same horizontal line. A distance between an antenna 1 (Rx1) and an antenna 2 (Rx2) of the device B is 0.5 X, and the antenna 1 and the antenna 2 are on a same horizontal line; reflection points are positions of P1, P2, and P3 in FIG. 7, and the reflection points can also be referred to as breathing points;

carrier signal: 3 GHz, and wavelength 0.1 m; and breathing movement: an amplitude of 0.5 mm (1/20 wavelength), a period of 50 ms, and a round trip speed following the sin function rule.

Mathematically, it can be described as follows.

It is known that a transmit signal X(t) is sent, a received signal Y(t) is received, and it goes through a channel H(t), where H(t) is decomposed into a relatively static part Hs(t,r) and a dynamic part Hd(t,$\tau$), and noise n(t).

$$Y(t)=X(t)*H(t,\tau)+n(t)$$
$$=X(t)*(Hs(t,\tau)+Hd(t,\tau))+n(t);$$

The problem becomes that given X(t) and Y(t), and find some characteristics of Hd(t,$\tau$) or Hd(t,$\tau$) in H(t,$\tau$). In this embodiment of this application, the accuracy of Hd(t,$\tau$) is the main concern, and the static part is not considered.

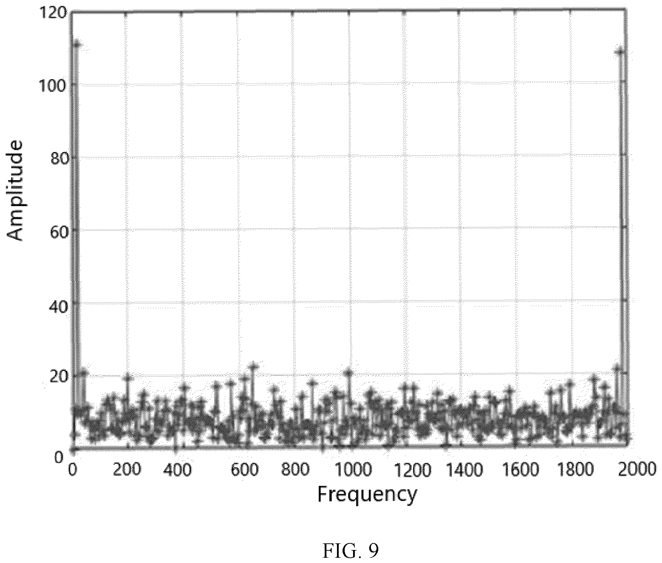

As shown in FIG. 8 and FIG. 9, FIG. 8 and FIG. 9 show results of frequency analysis of the channel frequency response corresponding to the perception signal received on the receive antenna, where the transmit power in FIG. 8 is 10 dB lower than that in FIG. 9. It can be seen that there is an obvious impact at 20 Hz, which is a breathing frequency assumed in the simulation.

It is assumed that the first indicator is the ratio of the maximum amplitude to the average amplitude of the target object, and the target object in the simulation is a result of frequency analysis of the channel frequency response corresponding to the perception signal received on the receive antenna. The first indicators in FIG. 8 and FIG. 9 are 12.35 dB and 22.59 dB respectively, which are basically equivalent to that the transmit power in FIG. 8 is 10 dB lower than that in FIG. 9. Therefore, it can be concluded that the second device sends the first indicator to the first device, and the first device adjusts the transmit power of the perception signal based on the first indicator, thus improving the rationality of the perception quality.

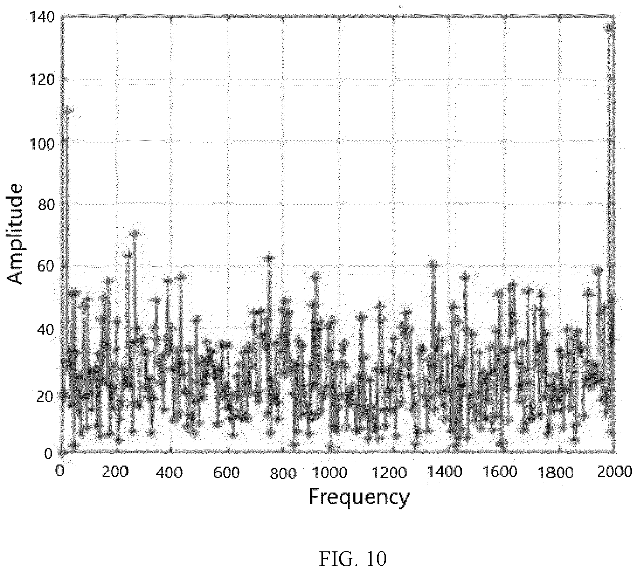

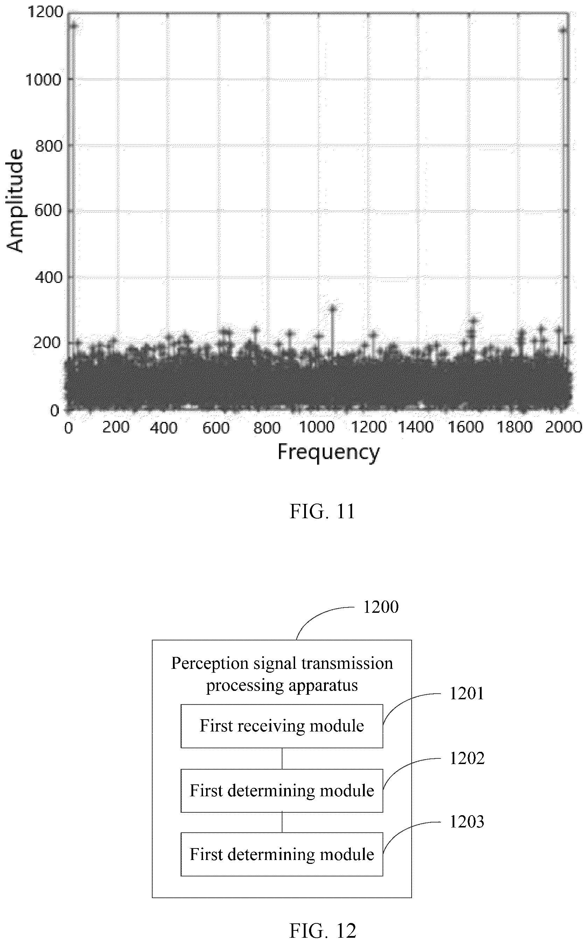

As shown in FIG. 10 and FIG. 11, FIG. 10 and FIG. 11 show results of frequency analysis of the channel frequency response corresponding to the perception signal received on the receive antenna, where the transmit power in FIG. 10 is the same as that in FIG. 11, the number of FFT sampling points in FIG. 10 is 400, and the number of FFT sampling points in FIG. 11 is 4000. It can be seen that there is an obvious impact at 20 Hz, which is a breathing frequency assumed in the simulation.

It is assumed that the first indicator is the ratio of the maximum amplitude to the average amplitude of the target object, and the target object in the simulation is a result of frequency analysis of the channel frequency response corresponding to the perception signal received on the receive antenna. The first indicators in FIG. 10 and FIG. 11 are 14.69 dB and 23.36 dB respectively, which are basically equivalent to the difference (10 times the dB value) of the sampling points of the channel frequency response corresponding to the perception signals in FIG. 10 and FIG. 11. Namely, 20*log10(10)=10 dB. Therefore, it can be concluded that the second device adjusts the reception mode of the perception signal based on the first indicator, thus improving the rationality of the perception quality.

It should be noted that an execution subject of the perception signal transmission processing method according to an embodiment of this application may be a perception signal transmission processing apparatus, or a control module for performing the perception signal transmission processing method in the perception signal transmission processing apparatus. In this embodiment of this application, the perception signal transmission processing apparatus according to an embodiment of this application is described by using an example in which the perception signal transmission processing apparatus performs the perception signal transmission processing method.

Referring to FIG. 12, FIG. 12 is a structural diagram of a perception signal transmission processing apparatus according to an embodiment of this application. As shown in FIG. 12, the perception signal transmission processing apparatus 1200 includes:

a first receiving module 1201, configured to receive target information from a second device, where the target information is used for indicating a first indicator or an expected adjustment parameter, and the first indicator is indicator information determined based on a sent first perception signal;
a first determining module 1202, configured to determine a first transmission parameter for a second perception signal based on the target information; and
a first sending module 1203, configured to send the second perception signal based on the first transmission parameter.

Optionally, the expected adjustment parameter includes at least one of the following: transmit power, a time length, a time interval, a transmit port, a frequency resource, and a codeword resource.

Optionally, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

Optionally, the first indicator further includes at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR).

Optionally, the target object includes at least one of the following:

the first data includes at least one of the following: a channel frequency response of the first perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;
a result obtained by performing first transform on second data, where the second data includes at least one of the following: a result obtained by performing point conjugate multiplying or point division on a channel frequency response of the first perception signal received by two receive antennas of the second device, an amplitude of the result, and a phase of the result; and
a result obtained by performing first transform on the target sequence.

Optionally, the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, where the first channel frequency response, the second channel frequency response, the third channel frequency response, and the fourth channel frequency response are channel frequency responses of the first perception signal received by different receive antennas of the second device.

Optionally, the first transform is fast Fourier transform (FFT) or wavelet transform.

Optionally, the first indicator is determined by the second device, and the first perception signal is sent by the first device.

Optionally, at least one of the first preset amplitude, the second preset amplitude, the first preset power, the second preset power, the first preset ratio, the second preset ratio, and the fourth preset ratio is specified in a protocol or notified to the second device by the first device.

Optionally, the first transmission parameter includes at least one of the following: transmit power, a time length, a time interval, a transmit port, a frequency resource, and a codeword resource.

Optionally, the first sending module 1203 is further configured to:

send second information to the second device or a core network device, where the second information is used for indicating the first transmission parameter.

The perception signal transmission processing apparatus provided in this embodiment of this application can implement processes of the method embodiment in FIG. 4. To avoid repetition, details are not described herein again.

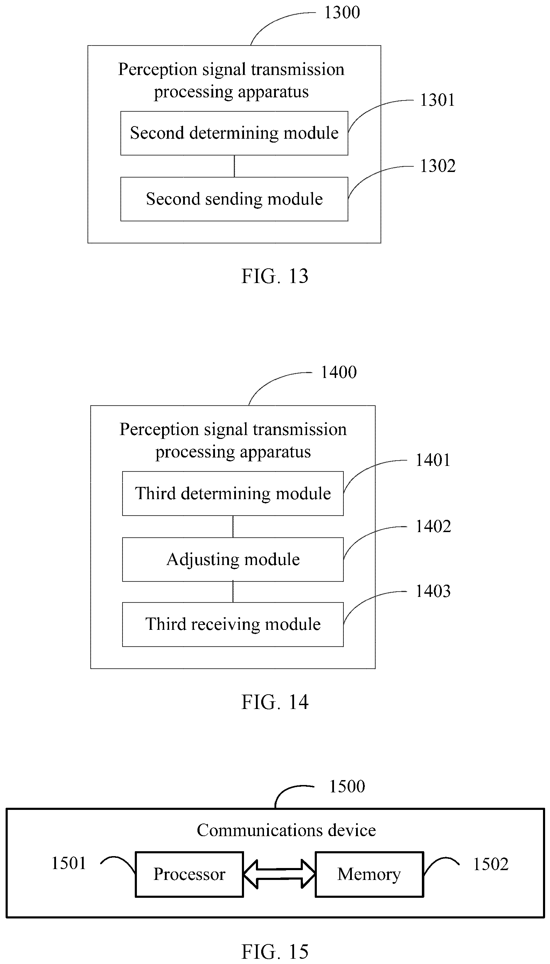

Referring to FIG. 13, FIG. 13 is a structural diagram of a perception signal transmission processing apparatus according to an embodiment of this application. As shown in FIG. 13, the perception signal transmission processing apparatus 1300 includes:

a second determining module 1301, configured to determine a first indicator or an expected adjustment parameter, where the first indicator is indicator information determined based on a first perception signal; and
a second sending module 1302, configured to send the target information to a target device, where the target information is used for indicating the first indicator or the expected adjustment parameter; and the target device is a first device or a core network device, and the target information is used for the first device to determine a first transmission parameter for a second perception signal.

Optionally, the perception signal transmission processing apparatus 1300 further includes:

a second receiving module, configured to: receive second information sent by the target device, where the second information is used for indicating the first transmission parameter; and receive the second perception signal based on the first transmission parameter.

Optionally, the first transmission parameter includes at least one of the following: transmit power, a time length, a time interval, a transmit port, a frequency resource, and a codeword resource.

Optionally, the expected adjustment parameter includes at least one of the following: transmit power, a time length, a time interval, a transmit port, a frequency resource, and a codeword resource.

Optionally, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

Optionally, the first indicator further includes at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR). Optionally, the target object includes at least one of the following:

a result obtained by performing first transform on first data, where the first data includes at least one of the following: a channel frequency response of the first perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;
a result obtained by performing first transform on second data, where the second data includes at least one of the following: a result obtained by performing point conjugate multiplying or point division on a channel frequency response of the first perception signal received by two receive antennas of the second device, an amplitude of the result, and a phase of the result; and
a result obtained by performing first transform on the target sequence.

Optionally, the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, where the first channel frequency response, the second channel frequency response, the third channel frequency response, and the fourth channel frequency response are channel frequency responses of the first perception signal received by different receive antennas of the second device.

Optionally, the first transform is fast Fourier transform (FFT) or wavelet transform.

Optionally, the first perception signal is sent by the first device.

Optionally, at least one of the first preset amplitude, the second preset amplitude, the first preset power, the second preset power, the first preset ratio, the second preset ratio, and the fourth preset ratio is specified in a protocol or notified to the second device by the first device.

The perception signal transmission processing apparatus provided in this embodiment of this application can implement processes of the method embodiment in FIG. 5. To avoid repetition, details are not described herein again.

Referring to FIG. 14, FIG. 14 is a structural diagram of a perception signal transmission processing apparatus according to an embodiment of this application. As shown in FIG. 14, the perception signal transmission processing apparatus 1400 includes:

> a third determining module 1401, configured to determine a first indicator based on a third perception signal;
> an adjusting module 1402, configured to adjust, based on the first indicator, a reception mode of the fourth perception signal; and
> a third receiving module 1403, configured to receive the fourth perception signal from the first device according to the reception mode.

Optionally, the third perception signal is sent by the second device or the first device.

Optionally, the first indicator includes first information of a target object, and the first information includes at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

Optionally, the first indicator further includes at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR).

Optionally, the target object includes at least one of the following:

> a result obtained by performing first transform on first data, where the first data includes at least one of the following: a channel frequency response of the third perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;
> a result obtained by performing first transform on second data, where the second data includes at least one of the following: a result obtained by performing point conjugate multiplying or point division on a channel frequency response of the third perception signal received by two receive antennas of the second device, an amplitude of the result, and a phase of the result; and
> a result obtained by performing first transform on the target sequence.

Optionally, the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, where the first channel frequency response, the second channel frequency response, the third channel frequency response, and the fourth channel frequency response are channel frequency responses of the third perception signal received by different receive antennas of the second device.

Optionally, the first transform is fast Fourier transform (FFT) or wavelet transform.

Optionally, at least one of the first preset amplitude, the second preset amplitude, the first preset power, the second preset power, the first preset ratio, the second preset ratio, and the fourth preset ratio is specified in a protocol or notified to the second device by the first device.

Optionally, the reception mode is associated with at least one of the following: a sampling frequency for the fourth perception signal, detection duration for the fourth perception signal, the number of receive antennas for receiving the fourth perception signal, a frequency resource for receiving the fourth perception signal, and the number of antenna ports for receiving the fourth perception signal.

The perception signal transmission processing apparatus provided in this embodiment of this application can implement processes of the method embodiment in FIG. 6. To avoid repetition, details are not described herein again.

The perception signal transmission processing apparatus in this embodiment of this application may be an apparatus or an apparatus or electronic device with an operating system, or may be a component, an integrated circuit, or a chip in a terminal. The apparatus may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, or a self-service machine. This is not specifically limited in this embodiment of this application.

Optionally, as shown in FIG. 15, an embodiment of this application further provides a communications device 1500, including a processor 1501, a memory 1502, and a program or an instruction stored in the memory 1502 and executable on the processor 1501, and when the program or the instruction is executed by the processor 1501, the processes of the perception signal transmission processing method embodiment are implemented, and a same technical effect can be achieved. To avoid repetition, details are not described herein again.

An embodiment of this application further provides a terminal, including a processor and a communications interface, where the communications interface is configured to receive target information from a second device, the target information is used for indicating a first indicator or an expected adjustment parameter, and the first indicator is indicator information determined based on a first perception signal;

the processor is configured to determine a first transmission parameter for a second perception signal based on the target information; and
the communications interface is further configured to send the second perception signal based on the first transmission parameter; or
the processor is configured to determine a first indicator or an expected adjustment parameter, where the first indicator is indicator information determined based on a first perception signal; and
the communications interface is configured to send the target information to a target device, where
the target information is used for indicating the first indicator or the expected adjustment parameter; and
the target device is a first device or a core network device, and the target information is used for the first device to determine a first transmission parameter for a second perception signal; or
the processor is configured to: determine a first indicator based on a third perception signal; and adjust, based on the first indicator, a reception mode of receiving a fourth perception signal from a first device; and
the communications interface is configured to receive the fourth perception signal according to the reception mode.

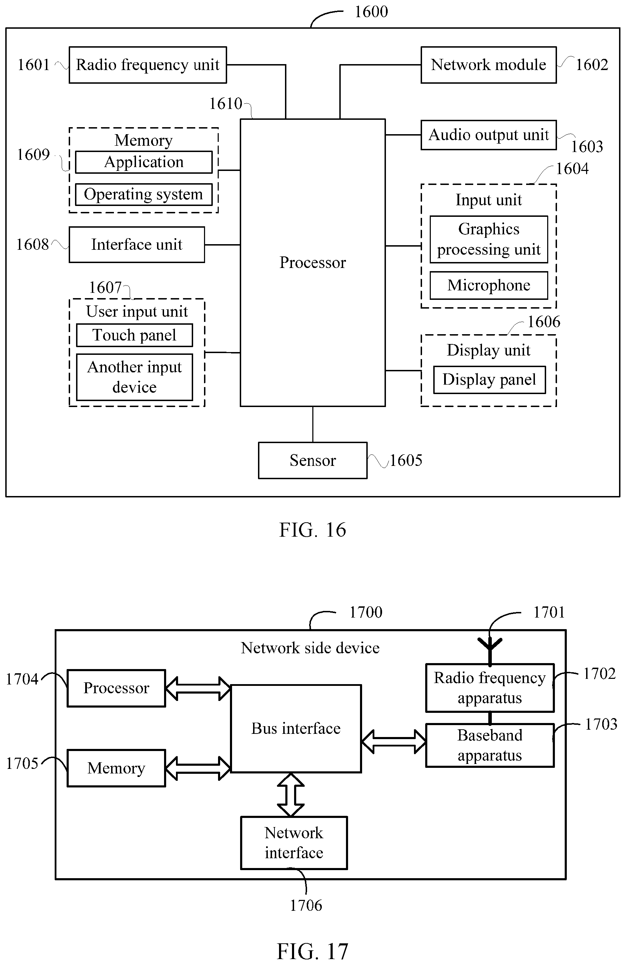

This terminal embodiment corresponds to the foregoing method embodiment on the terminal side. Each implementation process and implementation of the foregoing method embodiment may be applicable to this terminal embodiment, and a same technical effect can be achieved. Specifically, FIG. 16 is a schematic diagram of a hardware structure of a terminal according to an embodiment of this application.

A terminal 1600 includes but is not limited to components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art can understand that the terminal 1600 may further include a power supply (such as a battery) that supplies power to each component. The power supply may be logically connected to the processor 1610 by using a power supply management system, to implement functions such as charging and discharging management, and power consumption management by using the power supply management system. The terminal structure shown in FIG. 16 constitutes no limitation on the terminal, and the terminal may include more or fewer components than those shown in the figure, or combine some components, or have different component arrangements. Details are not described herein.

It should be understood that, in this embodiment of this application, the input unit 1604 may include a graphics processing unit (Graphics Processing Unit, GPU) and a microphone, and the graphics processing unit processes image data of a still image or a video that is obtained by an image capturing apparatus (for example, a camera) in a video capturing mode or an image capturing mode. The display unit 1606 may include a display panel. Optionally, the display panel may be configured in a form such as a liquid crystal display or an organic light-emitting diode. The user input unit 1607 may include a touch panel and another input device. The touch panel is also referred to as a touchscreen. The touch panel may include two parts: a touch detection apparatus and a touch controller. The another input device may include but is not limited to a physical keyboard, a functional button (such as a volume control button or a power on/off button), a trackball, a mouse, and a joystick. Details are not described herein.

In this embodiment of this application, the radio frequency unit 1601 receives downlink data from a network side device and then sends the downlink data to the processor 1610 for processing; and sends uplink data to the network side device. Generally, the radio frequency unit 1601 includes but is not limited to an antenna, at least one amplifier, a transceiver, a coupler, a low noise amplifier, a duplexer, and the like.

The memory 1609 may be configured to store a software program or an instruction and various data. The memory 109 may mainly include a program or instruction storage area and a data storage area. The program or instruction storage area may store an operating system, an application or an instruction required by at least one function (for example, a sound playing function or an image playing function), and the like. In addition, the memory 1609 may include a high-speed random access memory and non-transient memory. The non-transient memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transient solid-state storage device.

The processor 1610 may include one or more processing units. Optionally, an application processor and a modem processor may be integrated into the processor 1610. The application processor mainly processes an operating system, a user interface, an application, an instruction, or the like. The modem processor mainly processes wireless communication, for example, a baseband processor. It may be understood that, alternatively, the modem processor may not be integrated into the processor 1610.

The radio frequency unit 1601 is configured to receive target information from a second device, where the target information is used for indicating a first indicator or an expected adjustment parameter, and the first indicator is indicator information determined based on a first perception signal;

the processor 1610 is configured to determine a first transmission parameter for a second perception signal based on the target information; and
the radio frequency unit 1601 is further configured to send the second perception signal based on the first transmission parameter; or

the processor 1610 is configured to determine a first indicator or an expected adjustment parameter, where the first indicator is indicator information determined based on a first perception signal; and
the radio frequency unit 1601 is configured to send the target information to a target device, where
the target information is used for indicating the first indicator or the expected adjustment parameter; and
the target device is a first device or a core network device, and the target information is used for the first device to determine a first transmission parameter for a second perception signal; or
the processor 1610 is configured to: determine a first indicator based on a third perception signal; and adjust, based on the first indicator, a reception mode of receiving a fourth perception signal from a first device; and
the radio frequency unit 1601 is configured to receive the fourth perception signal according to the reception mode.

It should be understood that, in this embodiment, the processor 1610 and the radio frequency unit 1601 can implement the processes in the method embodiment of FIG. 2. To avoid repetition, details are not described herein again.

An embodiment of this application further provides a network side device, including a processor and a communications interface, where

the communications interface is configured to receive target information from a second device, where the target information is used for indicating a first indicator or an expected adjustment parameter, and the first indicator is indicator information determined based on a first perception signal;
the processor is configured to determine a first transmission parameter for a second perception signal based on the target information; and
the communications interface is further configured to send the second perception signal based on the first transmission parameter; or
the processor is configured to determine a first indicator or an expected adjustment parameter, where the first indicator is indicator information determined based on a first perception signal; and
the communications interface is configured to send the target information to a target device, where
the target information is used for indicating the first indicator or the expected adjustment parameter; and
the target device is a first device or a core network device, and the target information is used for the first device to determine a first transmission parameter for a second perception signal; or
the processor is configured to: determine a first indicator based on a third perception signal; and adjust, based on the first indicator, a reception mode of receiving a fourth perception signal from a first device; and

the communications interface is configured to receive the fourth perception signal according to the reception mode.

The network side device embodiment corresponds to the foregoing method embodiment of the network side device. Each implementation process and implementation of the foregoing method embodiment may be applicable to the network side device embodiment, and a same technical effect can be achieved.

Specifically, an embodiment of this application further provides a network side device. As shown in FIG. 17, a network side device 1700 includes an antenna 1701, a radio frequency apparatus 1702, and a baseband apparatus 1703. The antenna 1701 is connected to the radio frequency apparatus 1702. In an uplink direction, the radio frequency apparatus 1702 receives information by using the antenna 1701, and sends the received information to the baseband apparatus 1703 for processing. In a downlink direction, the baseband apparatus 1703 processes to-be-sent information, and sends the to-be-sent information to the radio frequency apparatus 1702. After processing the received information, the radio frequency apparatus 1702 sends the information through the antenna 1701.

The frequency band processing apparatus may be located in the baseband apparatus 1703. The method performed by the network side device in the foregoing embodiment may be implemented in the baseband apparatus 1703. The baseband apparatus 1703 includes a processor 1704 and a memory 1705.

The baseband apparatus 1703 may include, for example, at least one baseband board, where a plurality of chips are disposed on the baseband board. As shown in FIG. 17, one chip is, for example, the processor 1704, which is connected to the memory 1705, so as to invoke a program in the memory 1705 to perform operations of the network side device shown in the foregoing method embodiment.

The baseband apparatus 1703 may further include a network interface 1706, configured to exchange information with the radio frequency apparatus 1702. For example, the interface is a common public radio interface (common public radio interface, CPRI for short).

Specifically, the network side device in this embodiment of this application further includes an instruction or a program stored in the memory 1705 and executable on the processor 1704. The processor 1704 invokes the instruction or the program in the memory 1705 to perform the method performed by the modules shown in FIG. 12 to FIG. 14, and a same technical effect can be achieved. To avoid repetition, details are not provided herein again.

An embodiment of this application further provides a readable storage medium. The readable storage medium stores a program or an instruction. When the program or the instruction is executed by a processor, the processes of the foregoing embodiments of the perception signal transmission processing method are implemented, and a same technical effect can be achieved. To avoid repetition, details are not described herein again.

The processor is a processor in the electronic device in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application still provides a chip. The chip includes a processor and a communications interface, and the communications interface is coupled to the processor. The processor is configured to run a program or an instruction, to implement the processes of the foregoing embodiments of the perception signal transmission processing method, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a program product. The program product is stored in a non-transient storage medium, and the program product is executed by at least one processor to implement the processes of the foregoing embodiments of the perception signal transmission processing method, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. A perception signal transmission processing method, comprising:

   receiving, by a first device, target information from a second device, wherein the target information is used for indicating a first indicator or an expected adjustment parameter, and the first indicator is indicator information determined based on a first perception signal;
   determining, by the first device, a first transmission parameter for a second perception signal based on the target information; and
   sending, by the first device, the second perception signal based on the first transmission parameter.

2. The method according to claim 1, wherein the expected adjustment parameter comprises at least one of the following: transmit power, a time length, a time interval, a transmit port, a frequency resource, and a codeword resource.

3. The method according to claim 1, wherein the first indicator comprises first information of a target object, and the first information comprises at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

4. The method according to claim 3, wherein the first indicator further comprises at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR).

5. The method according to claim 3, wherein the target object comprises at least one of the following:

   a result obtained by performing first transform on first data, wherein the first data comprises at least one of the following: a channel frequency response of the first perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;
   a result obtained by performing first transform on second data, wherein the second data comprises at least one of the following: a result obtained by performing point conjugate multiplying or point division on a channel frequency response of the first perception signal received by two receive antennas of the second device, an amplitude of the result, and a phase of the result; and
   a result obtained by performing first transform on the target sequence.

6. The method according to claim 5, wherein the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, wherein
the first channel frequency response, the second channel frequency response, the third channel frequency response, and the fourth channel frequency response are channel frequency responses of the first perception signal received by different receive antennas of the second device.

7. The method according to claim 5, wherein the first transform is fast Fourier transform (FFT) or wavelet transform.

8. The method according to claim 1, wherein the first indicator is determined by the second device, and the first perception signal is sent by the first device.

9. The method according to claim 1, wherein the first transmission parameter comprises at least one of the following: transmit power, a time length, a time interval, a transmit port, a frequency resource, and a codeword resource.

10. The method according to claim 1, wherein after the determining, by the first device, a first transmission parameter for a second perception signal based on the target information, the method further comprises: sending, by the first device, second information to the second device or a core network device, wherein the second information is used for indicating the first transmission parameter.

11. A perception signal transmission processing method, comprising:

   determining, by a second device, a first indicator or an expected adjustment parameter, wherein the first indicator is indicator information determined based on a first perception signal; and
   sending, by the second device, target information to a target device, wherein
   the target information is used for indicating the first indicator or the expected adjustment parameter; and the target device is a first device or a core network device, and the target information is used for the first device to determine a first transmission parameter for a second perception signal.

12. The method according to claim 11, wherein after the sending, by the second device, target information to a target device, the method further comprises:

   receiving, by the second device, second information sent by the target device, wherein the second information is used for indicating the first transmission parameter; and
   receiving, by the second device, the second perception signal based on the first transmission parameter.

13. The method according to claim 12, wherein the first transmission parameter comprises at least one of the following: transmit power, a time length, a time interval, a transmit port, a frequency resource, and a codeword resource.

14. The method according to claim 11, wherein the expected adjustment parameter comprises at least one of the following: transmit power, a time length, a time interval, a transmit port, a frequency resource, and a codeword resource.

15. The method according to claim 11, wherein the first indicator comprises first information of a target object, and the first information comprises at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

16. The method according to claim 15, wherein the first indicator further comprises at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR).

17. The method according to claim 15, wherein the target object comprises at least one of the following:

a result obtained by performing first transform on first data, wherein the first data comprises at least one of the following: a channel frequency response of the first perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;

a result obtained by performing first transform on second data, wherein the second data comprises at least one of the following: a result obtained by performing point conjugate multiplying or point division on a channel frequency response of the first perception signal received by two receive antennas of the second device, an amplitude of the result, and a phase of the result; and

a result obtained by performing first transform on the target sequence.

18. The method according to claim 17, wherein the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, wherein

the first channel frequency response, the second channel frequency response, the third channel frequency response, and the fourth channel frequency response are channel frequency responses of the first perception signal received by different receive antennas of the second device.

19. The method according to claim 17, wherein the first transform is fast Fourier transform (FFT) or wavelet transform.

20. The method according to claim 15, wherein the first perception signal is sent by the first device.

21. A perception signal transmission processing method, comprising:

determining, by a second device, a first indicator based on a third perception signal;

adjusting, by the second device, a reception mode of a fourth perception signal based on the first indicator; and

receiving, by the second device, the fourth perception signal from a first device according to the reception mode.

22. The method according to claim 21, wherein the third perception signal is sent by the second device or the first device.

23. The method according to claim 21, wherein the first indicator comprises first information of a target object, and the first information comprises at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

24. The method according to claim 23, wherein the first indicator further comprises at least one of the following: a signal to noise ratio (SNR), a signal to interference plus noise ratio (SINR), reference signal received power (RSRP), received signal strength indication (RSSI), reference signal received quality (RSRQ), a detection probability, a perception error, a signal noise ratio, a signal side lobe feature, and a peak to average power ratio (PAPR).

25. The method according to claim 23, wherein the target object comprises at least one of the following:

a result obtained by performing first transform on first data, wherein the first data comprises at least one of the following: a channel frequency response of the third perception signal, an amplitude of the channel frequency response, a phase of the channel frequency response, I-channel data of the channel frequency response, Q-channel data of the channel frequency response, and a result obtained by performing a preset operation on the I-channel data of the channel frequency response and the Q-channel data of the channel frequency response;

a result obtained by performing first transform on second data, wherein the second data comprises at least one of the following: a result obtained by performing point conjugate multiplying or point division on a channel frequency response of the third perception signal received by two receive antennas of the second device, an amplitude of the result, and a phase of the result; and

a result obtained by performing first transform on the target sequence.

26. The method according to claim 25, wherein the target sequence is determined based on a first sequence and a second sequence, and the first sequence is determined based on a first channel frequency response and a second channel frequency response; and the second sequence is obtained by performing point conjugate multiplying or point division on a third channel frequency response and a fourth channel frequency response, or the second sequence is determined based on a third channel frequency response and the first channel frequency response, wherein

the first channel frequency response, the second channel frequency response, the third channel frequency response, and the fourth channel frequency response are channel frequency responses of the third perception signal received by different receive antennas of the second device.

27. The method according to claim 25, wherein the first transform is fast Fourier transform (FFT) or wavelet transform.

28. The method according to claim 23, wherein at least one of the first preset amplitude, the second preset amplitude, the first preset power, the second preset power, the first preset ratio, the second preset ratio, and the fourth preset ratio is specified in a protocol or notified to the second device by the first device.

29. The method according to claim 21, wherein the reception mode is associated with at least one of the following: a sampling frequency for the fourth perception signal, detection duration for the fourth perception signal, the number of receive antennas for receiving the fourth perception signal, a frequency resource for receiving the fourth perception signal, and the number of antenna ports for receiving the fourth perception signal.

30. A perception signal transmission processing apparatus, comprising:

a first receiving module, configured to receive target information from a second device, wherein the target information is used for indicating a first indicator or an expected adjustment parameter, and the first indicator is indicator information determined based on a sent first perception signal;
a first determining module, configured to determine a first transmission parameter for a second perception signal based on the target information; and
a first sending module, configured to send the second perception signal based on the first transmission parameter.

31. The apparatus according to claim 30, wherein the first indicator comprises first information of a target object, and the first information comprises at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

32. A perception signal transmission processing apparatus, comprising:

a second determining module, configured to determine a first indicator or an expected adjustment parameter, wherein the first indicator is indicator information determined based on a first perception signal; and
a second sending module, configured to send the target information to a target device, wherein the target information is used for indicating the first indicator or the expected adjustment parameter; and the target device is a first device or a core network device, and the target information is used for the first device to determine a first transmission parameter for a second perception signal.

33. The apparatus according to claim 32, wherein the first indicator comprises first information of a target object, and the first information comprises at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

34. A perception signal transmission processing apparatus, comprising:

a third determining module, configured to determine a first indicator based on a third perception signal;
an adjusting module, configured to adjust, based on the first indicator, a reception mode of receiving a fourth perception signal from a first device; and
a third receiving module, configured to receive the fourth perception signal according to the reception mode.

35. The apparatus according to claim 34, wherein the first indicator comprises first information of a target object, and the first information comprises at least one of the following: a ratio of a maximum amplitude to an average amplitude, the maximum amplitude, a ratio of an amplitude of a target frequency to the average amplitude, the amplitude of the target frequency, a difference between the ratio of the maximum amplitude to the average amplitude and a first preset ratio, a difference between the maximum amplitude and a first preset amplitude, a difference between the ratio of the amplitude of the target frequency to the average amplitude and a second preset ratio, a difference between the amplitude of the target frequency and a second preset amplitude, a ratio of maximum power to average power, the maximum power, a ratio of power of the target frequency to the average power, the power of the target frequency, a difference between the ratio of the maximum power to the average power and a third preset ratio, a difference between the maximum power and first preset power, a difference between the ratio of the power of the target frequency to the average power and a fourth preset ratio, and a difference between the power of the target frequency and second preset power.

36. An electronic device, comprising: a memory, a processor, and a program stored in the memory and executable on the processor, wherein when the program is executed by the processor, steps of the perception signal transmission processing method according to any one of claims 1 to 29 are implemented.

37. A readable storage medium, wherein the readable storage medium stores a program or an instruction, and when the program or the instruction is executed by a processor, steps of the perception signal transmission processing method according to any one of claims 1 to 29 are implemented.

38. A terminal, comprising a processor, a memory, and a program or an instruction stored in the memory and executable on the processor, wherein when the program or the instruction is executed by the processor, steps of the perception signal transmission processing method according to any one of claims 1 to 29 are implemented.

39. A terminal, comprising a processor and a communications interface, wherein

the communications interface is configured to receive target information from a second device, wherein the target information is used for indicating a first indicator or an expected adjustment parameter, and the first indicator is indicator information determined based on a first perception signal;
the processor is configured to determine a first transmission parameter for a second perception signal based on the target information; and
the communications interface is further configured to send the second perception signal based on the first transmission parameter; or
the processor is configured to determine a first indicator or an expected adjustment parameter, wherein the first indicator is indicator information determined based on a first perception signal; and

the communications interface is configured to send the target information to a target device, wherein

the target information is used for indicating the first indicator or the expected adjustment parameter; and the target device is a first device or a core network device, and the target information is used for the first device to determine a first transmission parameter for a second perception signal; or

the processor is configured to: determine a first indicator based on a third perception signal; and adjust, based on the first indicator, a reception mode of receiving a fourth perception signal from a first device; and

the communications interface is configured to receive the fourth perception signal according to the reception mode.

40. A network side device, comprising a processor, a memory, and a program or an instruction stored in the memory and executable on the processor, wherein when the program or the instruction is executed by the processor, steps of the perception signal transmission processing method according to any one of claims 1 to 29 are implemented.

41. A network side device, comprising a processor and a communications interface, wherein

the communications interface is configured to receive target information from a second device, wherein the target information is used for indicating a first indicator or an expected adjustment parameter, and the first indicator is indicator information determined based on a first perception signal;

the processor is configured to determine a first transmission parameter for a second perception signal based on the target information; and

the communications interface is further configured to send the second perception signal based on the first transmission parameter; or

the processor is configured to determine a first indicator or an expected adjustment parameter, wherein the first indicator is indicator information determined based on a first perception signal; and

the communications interface is configured to send the target information to a target device, wherein

the target information is used for indicating the first indicator or the expected adjustment parameter; and the target device is a first device or a core network device, and the target information is used for the first device to determine a first transmission parameter for a second perception signal.

42. A chip, comprising a processor and a communications interface, wherein the communications interface is coupled to the processor, and the processor is configured to run a program or an instruction, to implement steps of the perception signal transmission processing method according to any one of claims 1 to 29.

43. A computer program product, wherein the program product is stored in a non-volatile storage medium, and the program product is executed by at least one processor, to implement steps of the perception signal transmission processing method according to any one of claims 1 to 29.

Network
side device

Terminal

Terminal

FIG. 1

Perceived target

Terminal

Network side
device

FIG. 2

A second device determines a first indicator or an expected adjustment parameter — 501

The second device sends target information to a target device — 502

FIG. 5

A second device determines a first indicator based on a third perception signal — 601

The second device adjusts a reception mode of a fourth perception signal based on the first indicator — 602

The second device receives the fourth perception signal from a first device according to the reception mode — 603

FIG. 6

FIG. 7

FIG. 8

FIG. 9

FIG. 10

FIG. 11

FIG. 12

— 1300

**Perception signal transmission processing apparatus**

Second determining module — 1301

Second sending module — 1302

FIG. 13

— 1400

**Perception signal transmission processing apparatus**

Third determining module — 1401

Adjusting module — 1402

Third receiving module — 1403

FIG. 14

— 1500

**Communications device**

1501 — Processor ⇔ Memory — 1502

FIG. 15

1600

Radio frequency unit — 1601

Network module — 1602

Memory — 1609
Application
Operating system

1610 — Processor

Audio output unit — 1603

Input unit — 1604
Graphics processing unit
Microphone

Interface unit — 1608

User input unit — 1607
Touch panel
Another input device

Display unit — 1606
Display panel

Sensor — 1605

FIG. 16

Network side device — 1700

1701

Processor — 1704

Bus interface

Radio frequency apparatus — 1702

Baseband apparatus — 1703

Memory — 1705

Network interface

1706

FIG. 17

## INTERNATIONAL SEARCH REPORT

International application No.

**PCT/CN2022/117840**

### A. CLASSIFICATION OF SUBJECT MATTER

H04W 16/14(2009.01)i;  H04B 17/382(2015.01)i

According to International Patent Classification (IPC) or to both national classification and IPC

### B. FIELDS SEARCHED

Minimum documentation searched (classification system followed by classification symbols)

H04W,  H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 感知, 参数, 指示, 发送, 接收, 功率, 时间, 端口, 幅度, 信噪比, 信干噪比, 参考信号接收功率, 接收信号强度指示, 参考信号接收质量, percept+, parameter+, duration, interval, port?, frequency, send+ , recept+, SNR, SINR, RSRP, RSSI, RSRQ

### C. DOCUMENTS CONSIDERED TO BE RELEVANT

| Category* | Citation of document, with indication, where appropriate, of the relevant passages | Relevant to claim No. |
|---|---|---|
| X | US 2016278003 A1 (LG ELECTRONICS INC. et al.) 22 September 2016 (2016-09-22) description, paragraphs [0059]-[0517], and figures 1-28 | 1-20, 30-33, 36-38, 40-43 |
| X | WO 2021022531 A1 (NOKIA SHANGHAI BELL CO., LTD. et al.) 11 February 2021 (2021-02-11) description, paragraphs [0067]-[0233], and figures 1-21 | 21-29, 34-38, 40, 42, 43 |
| Y | US 2016278003 A1 (LG ELECTRONICS INC. et al.) 22 September 2016 (2016-09-22) description, paragraphs [0059]-[0517], and figures 1-28 | 39 |
| Y | WO 2021022531 A1 (NOKIA SHANGHAI BELL CO., LTD. et al.) 11 February 2021 (2021-02-11) description, paragraphs [0067]-[0233], and figures 1-21 | 39 |
| A | CN 103686739 A (CHINA ACADEMY OF TELECOMMUNICATIONS TECHNOLOGY) 26 March 2014 (2014-03-26) entire document | 1-43 |
| A | CN 110972301 A (TELECOMMUNICATIONS TECHNOLOGY RESEARCH INSTITUTE CO., LTD.) 07 April 2020 (2020-04-07) entire document | 1-43 |

☑ Further documents are listed in the continuation of Box C.       ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 November 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/117840**

**C.** **DOCUMENTS CONSIDERED TO BE RELEVANT**

| Category* | Citation of document, with indication, where appropriate, of the relevant passages | Relevant to claim No. |
|---|---|---|
| A | US 2020413388 A1 (QUALCOMM INCORPORATED) 31 December 2020 (2020-12-31) entire document | 1-43 |

Form PCT/ISA/210 (second sheet) (January 2015)

**INTERNATIONAL SEARCH REPORT**
Information on patent family members

International application No.

**PCT/CN2022/117840**

| Patent document cited in search report | | | Publication date (day/month/year) | Patent family member(s) | | | Publication date (day/month/year) |
|---|---|---|---|---|---|---|---|
| US | 2016278003 | A1 | 22 September 2016 | WO | 2015065110 | A1 | 07 May 2015 |
| WO | 2021022531 | A1 | 11 February 2021 | None | | | |
| CN | 103686739 | A | 26 March 2014 | None | | | |
| CN | 110972301 | A | 07 April 2020 | None | | | |
| US | 2020413388 | A1 | 31 December 2020 | CN | 110431757 | A | 08 November 2019 |
| | | | | WO | 2018165304 | A1 | 13 September 2018 |
| | | | | EP | 3593478 | A1 | 15 January 2020 |
| | | | | ES | 2881487 | T3 | 29 November 2021 |
| | | | | TW | 201843968 | A | 16 December 2018 |
| | | | | TW | 202218369 | A | 01 May 2022 |
| | | | | US | 2018263024 | A1 | 13 September 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111075442